# EUROPÄISCHE PATENTSCHRIFT

(11) **EP 1 168 694 B1**
(45) Veröffentlichungstag und Bekanntmachung des Hinweises auf die Patenterteilung: **20.11.2013**
(21) Anmeldenummer: 01114255.1
(22) Anmeldetag: 12.06.2001
(51) Int. Cl.: H04J 3/06, H04L 7/10, B60R 16/02

(54) **Synchrones Netzwerk**
Synchronous network
Réseau synchrone

(30) Priorität: 30.06.2000 DE 10030993
(43) Veröffentlichungstag der Anmeldung: 02.01.2002
(73) Patentinhaber: Infineon Technologies AG, 85579 Neubiberg (DE)
(72) Erfinder: Von Wendorff, Wilhard, Dr., 81241 München (DE)
(74) Vertreter: Jannig, Peter

(56) Entgegenhaltungen:
- US-A- 5 206 881
- US-A- 5 463 646
- US-A- 5 576 702
- US-A- 5 706 278
- US-A- 5 774 658
- US-A- 5 923 902

## Beschreibung

Die vorliegende Erfindung betrifft eine Vorrichtung gemäß dem Oberbegriff des Patentanspruchs 1.

Ein synchrones Netzwerk mit einer Vielzahl von Knoten, die in einer vorgegebenen Reihenfolge für eine vorgegebene Dauer Daten zueinander übertragen können, ist beispielsweise ein nach dem sogenannten TDMA-Verfahren arbeitendes Netzwerk. TDMA steht für time division multiple access.

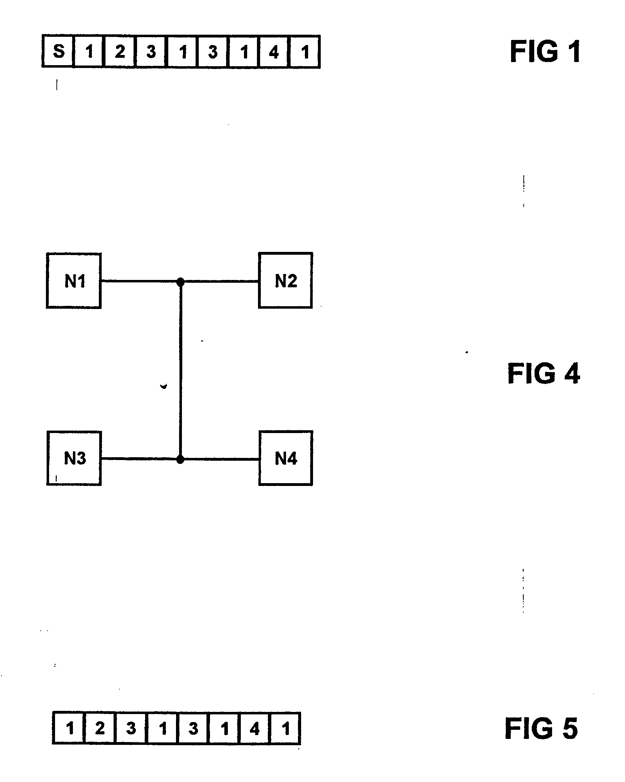

Der Aufbau eines solchen Netzwerks ist in Figur 4 veranschaulicht.

Das in der Figur 4 gezeigte Netzwerk umfaßt vier, im folgenden als Knoten bezeichnete Einheiten N1 bis N4, und eine diese Knoten verbindende Übertragungsstrecke T, über welche zwischen den Knoten N1 bis N4 zu übertragenden Daten übertragen werden können.

Der Vollständigkeit halber sei darauf hingewiesen, daß die Anzahl der Knoten nicht auf vier beschränkt ist; sie kann beliebig viel größer oder kleiner sein.

Ferner sei angemerkt, daß die Übertragungsstrecke T beliebig ausgebildet sein kann; es kann sich um eine zur Übertragung elektrischer Signale dienende elektrische Leitung, um einen zur Übertragung optischer Signale dienenden Lichtwellenleiter, um einen eine drahtlose Übertragung von Daten ermöglichenden Übertragungskanal, oder um eine sonstige Übertragungsstrecke handeln.

In den Knoten N1 bis N4 ist festgelegt, in welcher Reihenfolge die jeweiligen Knoten übertragen dürfen, und wie breit der Zeitschlitz ist, während welchem sie Daten übertragen dürfen. Im betrachteten Beispiel sei angenommen, daß
- ein erster Zeitschlitz für die Übertragung von Daten durch den ersten Knoten N1 reserviert ist,
- ein zweiter Zeitschlitz für die Übertragung von Daten durch den zweiten Knoten N2 reserviert ist,
- ein dritter Zeitschlitz für die Übertragung von Daten durch den dritten Knoten N3 reserviert ist,
- ein vierter Zeitschlitz für die Übertragung von Daten durch den ersten Knoten N1 reserviert ist,
- ein fünfter Zeitschlitz für die Übertragung von Daten durch den dritten Knoten N3 reserviert ist,
- ein sechster Zeitschlitz für die Übertragung von Daten durch den ersten Knoten N1 reserviert ist,
- ein siebter Zeitschlitz für die Übertragung von Daten durch den vierten Knoten N4 reserviert ist,
- ein achter Zeitschlitz für die Übertragung von Daten durch den ersten Knoten N1 reserviert ist, und
- daß sich an diese, als ein Zyklus bezeichnete Zeitschlitz-Folge mit oder ohne zeitlichem Abstand ein oder mehrere weitere solche Zyklen anschließen können.

Ein solcher Zyklus ist in Figur 5 veranschaulicht; die in den Zeitschlitzen angegebenen Zahlen bezeichnen die Nummer des Knotens, für welche die betreffenden Zeitschlitze bestimmt sind.

Der Vollständigkeit halber sei angemerkt, daß die Länge der einzelnen Zeitschlitze unabhängig voneinander beliebig groß sein kann, und daß zwischen den Zeitschlitzen Pausen vorgesehen sein können.

Ein bekanntes Problem bei Systemen dieser Art besteht darin, daß die Knoten N1 bis N4 nach der Inbetriebnahme, nach Fehlern, nach Betriebsart-Wechseln etc. synchronisiert werden müssen, und daß sichergestellt werden muß, daß sie synchronisiert bleiben. Anderenfalls kann es passieren, daß die Knoten nicht oder nicht genau in den für sie reservierten Zeitschlitzen Daten übertragen, und dies kann dazu führen, daß sich auf der Übertragungsstrecke T von verschiedenen Knoten stammende Daten überlagern oder überlappen und dadurch unbrauchbar werden.

Die Synchronisierung der Knoten erfolgt im allgemeinen nach einer der zwei nachfolgend beschriebenen Methoden.

Die erste Methode besteht darin, daß einer der Knoten den anderen Knoten einen Referenz-Takt zuführt, und daß sich die anderen Knoten unter Berücksichtigung dieses Referenz-Taktes auf den den Referenz-Takt versendenden Knoten synchronisieren. Diese Methode hat den Nachteil, daß bei einem Ausfall des den Referenz-Takt versendenden Knotens das gesamte System ausfällt.

Die zweite Möglichkeit besteht darin, daß sich die Knoten unter Berücksichtigung des Anfangs- und/oder Endzeitpunktes und/oder der Dauer der Übertragung von Daten von einem Knoten zu einem anderen Knoten synchronisieren. Diese Methode hat den Nachteil, daß es nach der Inbetriebnahme des Systems eine unbestimmt lange Zeit dauert, bis die Knoten synchronisiert sind; diese Art von Synchronisation kann nämlich erst erfolgen, nachdem ein Knoten Daten übertragen konnte, ohne daß gleichzeitig ein anderer Knoten Daten überträgt, und dies ist vor der Synchronisation, also zu einem Zeitpunkt, zu dem noch nicht festgelegt ist, wann welcher Knoten senden darf, mitunter eine langwierige Angelegenheit.

Ein weiteres synchrones Netzwerk ist aus der US 5706278 bekannt. Das darin beschriebene Netzwerk ist ein Netzwerk gemäß dem Oberbegriff des Patentanspruchs 1. Die in diesem Netzwerk durchgeführte Synchronisierung ist jedoch sehr aufwendig und kann zudem lange dauern.

Der vorliegenden Erfindung liegt daher die Aufgabe zugrunde, das Netzwerk gemäß dem Oberbegriff des Patentanspruchs 1 derart weiterzubilden, daß die Knoten desselben unter allen Umständen schnell und einfach synchronisiert werden können.

Diese Aufgabe wird erfindungsgemäß durch das in Patentanspruch 1 beanspruchte Netzwerk gelöst.

Ein derartiges Netzwerk erweist sich in zweifacher Hinsicht als vorteilhaft:
Einerseits können mehrere oder alle Knoten einen Bezugszeitpunkt vorgeben, auf den synchronisiert werden soll.

Andererseits muß das den Bezugszeitpunkt spezifizierende Synchronisationssignal keine Angaben über den Absender oder sonstige Informationen enthalten, so daß das Synchronisationssignal so beschaffen sein kann, daß es die Synchronisation nicht stört, wenn sich die Synchronisationssignale mehrerer Knoten zeitlich überlappen.

Dadurch ist es möglich, die Knoten unter allen Umständen schnell und einfach zu synchronisieren.

Vorteilhafte Weiterbildungen der Erfindung sind den Unteransprüchen, der folgenden Beschreibung, und den Figuren entnehmbar.

Die Erfindung wird nachfolgend anhand von Ausführungsbeispielen unter Bezugnahme auf die Figuren näher erläutert. Es zeigen
- Figur 1: eine Darstellung der beim nachfolgend beschriebenen Netzwerk vorgenommenen Zuordnung der Zeitschlitze eines Zeitschlitz-Zyklusses zu den einzelnen Knoten des Netzwerks,
- Figur 2: eine Darstellung zur Veranschaulichung der Synchronisation zweier Knoten des nachfolgend näher beschriebenen Netzwerks,
- Figur 3: eine weitere Darstellung zur Veranschaulichung der Synchronisation zweier Knoten des nachfolgend näher beschriebenen Netzwerks,
- Figur 4: den Aufbau eines nach dem TDMA-Verfahren arbeitenden Netzwerks, und
- Figur 5: eine Darstellung der beim eingangs unter Bezugnahme auf die Figur 4 beschriebenen Netzwerk vorgenommenen Zuordnung der Zeitschlitze eines Zeitschlitz-Zyklusses zu den einzelnen Knoten des Netzwerks.

Das nachfolgend beschriebene Netzwerk weist den in Figur 4 gezeigten und eingangs bereits beschriebenen Aufbau auf.

Allerdings sind der Aufbau und der Betrieb der Knoten anders als bei herkömmlichen Systemen dieser Art.

Eine der Besonderheiten des betrachteten Systems besteht darin, daß mehrere oder alle Knoten ein einen Bezugszeitpunkt für die Synchronisation der Knoten definierendes Synchronisationssignal ausgeben können.

Dies ermöglicht eine unter allen Umständen schnelle und sichere Synchronisation der Knoten.

Eine weitere Besonderheit des betrachteten Systems besteht darin, daß der verwendete Zeitschlitz-Zyklus einen zusätzlichen, im folgenden als globalen Zeitschlitz bezeichneten Zeitschlitz aufweist, in welchem beliebige Knoten beliebige Daten übertragen können.

Ein solcher Zeitschlitz-Zyklus ist in Figur 1 veranschaulicht; der globale Zeitschlitz ist mit dem Bezugszeichen S bezeichnet. Der Vollständigkeit halber sei darauf hingewiesen, daß die Anzahl der einen Zeitschlitz-Zyklus bildenden Zeitschlitze, deren Länge, und die Knoten, für welche diese reserviert sind, unabhängig voneinander auch beliebig anders festlegbar sind.

Im globalen Zeitschlitz S und in den anderen, nachfolgend als private Zeitschlitze bezeichneten Zeitschlitzen können die Knoten prinzipiell beliebige Daten übertragen.

Im betrachteten Beispiel umfassen die in den privaten Zeitschlitzen übertragenen Daten zumindest eine Angabe des Knotens, welcher die betreffenden Daten ausgegeben hat.

Nachdem ein Knoten mit einem oder mehreren anderen Knoten synchronisiert ist, überträgt der betreffende Knoten in allen ihm zugeordneten privaten Zeitschlitzen Daten. Dies gilt auch dann, wenn der betreffende Knoten gar keine (Nutz-)Daten zu übertragen hat. In diesem Fall enthalten die übertragenen Daten neben der Angabe des Absenders der Daten vorzugsweise auch eine Information darüber, daß keine Nutzdaten übertragen werden.

Übertragene Daten, die keine Nutzdaten enthalten, werden im folgenden als Null-Daten bezeichnet.

Im betrachteten Beispiel werden die Knoten des Systems wie folgt synchronisiert:
Wenn ein Knoten sich (nach der Inbetriebnahme, nach einem Betriebsart-Wechsel, nach einem Fehler oder sonstigen Ereignissen) mit einem oder mehreren anderen Knoten synchronisieren möchte, beobachtet er zunächst vorbestimmte Zeit lang, ob bereits ein oder mehrere andere Knoten ein Synchronisationssignal oder Daten übertragen. Die vorbestimmte Zeit entspricht im betrachteten Beispiel der Dauer eines Zeitschlitz-Zyklusses plus die maximale Signallaufzeit, die im System auftreten kann.

Werden in diesem Zeitraum weder ein Synchronisationssignal noch andere Daten übertragen,
- gibt der betreffende Knoten ein Synchronisationssignal aus,
- legt intern fest, daß der Anfangszeitpunkt der Synchronisationssignal-Ausgabe der Beginn des globalen Zeitschlitzes S ist, und
- gibt in einem (vorzugsweise im nächsten) privaten Zeitschlitz, der ihm zugeordnet ist, Daten aus, durch welche er sich gegenüber anderen Knoten identifiziert.

Die Ausgabe des Synchronisationssignals und der den Knoten identifizierenden Daten werden in den darauffolgenden Zeitschlitz-Zyklen wiederholt. D.h. der Knoten
- gibt in jedem globalen Zeitschlitz ein Synchronisationssignal aus, und
- gibt im jeweils einem (vorzugsweise im ersten) der ihm zugeordneten privaten Zeitschlitze eines jeden Zeitschlitz-Zyklusses ihn identifizierende Daten aus.

Daß der Knoten in dieser Phase (in der Synchronisationsphase) unabhängig von der Anzahl der privaten Zeitschlitze, die ihm pro Zeitschlitz-Zyklus zugeordnet sind, nur in einem einzigen privaten Zeitschlitz pro Zeitschlitz-Zyklus Daten ausgibt, hat den positiven Effekt, daß der (noch nicht synchronisierte) Knoten einen bereits stattfindenden Datenaustausch zwischen anderen (bereits synchronisierten oder sich gerade synchronisierenden) Knoten nicht oder nur geringfügig stören kann. Dies ist von Bedeutung, wenn der Knoten aufgrund eines Fehlers nicht erkannt hat oder nicht erkennen konnte, daß andere Knoten bereits Daten und/oder Signale versenden.

Wenn ein Knoten, der sich mit einem oder mehreren anderen Knoten synchronisieren möchte, bei der Überprüfung, ob bereits ein oder mehrere andere Knoten ein Synchronisationssignal oder Daten übertragen, feststellt, daß dies der Fall ist, gibt er kein eigenes Synchronisationssignal aus, sondern synchronisiert sich unter Berücksichtigung des empfangenen Synchronisationssignals und/oder der empfangenen Daten mit dem das Synchronisationssignal und/oder die Daten ausgebenden Knoten, und gibt sodann in einem ihm zugeordneten privaten Zeitschlitz (vorzugsweise bereits im nächsten ihm zugeordneten privaten Zeitschlitz) ihn identifizierende Daten aus. Diese Daten können Null-Daten sein oder bereits Nutzdaten enthalten.

Der andere (das Synchronisationssignal ausgebende) Knoten erkennt an dem Umstand, daß ein anderer Knoten ihn identifizierende Daten ausgibt, daß eine Synchronisation mit dem anderen Knoten erfolgt ist, und schaltet daraufhin von der Synchronisations-Betriebsart in die normale Betriebsart um, in welcher er nicht mehr nur Null-Daten, sondern auch Nutzdaten enthaltende Daten übertragen kann. Zusätzlich kann der erste Knoten von da an auch die Ausgabe von Synchronisationssignalen einstellen. Dies erweist sich als vorteilhaft, weil der globale Zeitschlitz dann für andere Zwecke benutzt werden kann. Die Ausgabe der Synchronisationssignale kann aber auch fortgesetzt werden. Dies eröffnet die Möglichkeit, daß das System auch Knoten enthalten kann, die einen externen Referenz-Takt zur Synchronisation und/oder zur Aufrechterhaltung der Synchronisation benötigen. Sofern die Synchronisationssignale auch nach erfolgter Synchronisation ausgegeben werden, kann vorgesehen werden, daß nicht nur ein Knoten, sondern mehrere oder alle Knoten, die bereits synchronisiert sind, Synchronisationssignale ausgeben. Dadurch kann vermieden werden, daß Knoten, die auf den Erhalt von Synchronisationssignalen angewiesen sind, automatisch ausfallen, wenn der die Synchronisationssignale ausgebende Knoten ausfällt.

Wenn sich danach ein oder mehrere weitere Knoten synchronisieren wollen, laufen im wesentlichen die selben Vorgänge wie bei der vorstehend beschriebenen Knoten-Synchronisation ab.

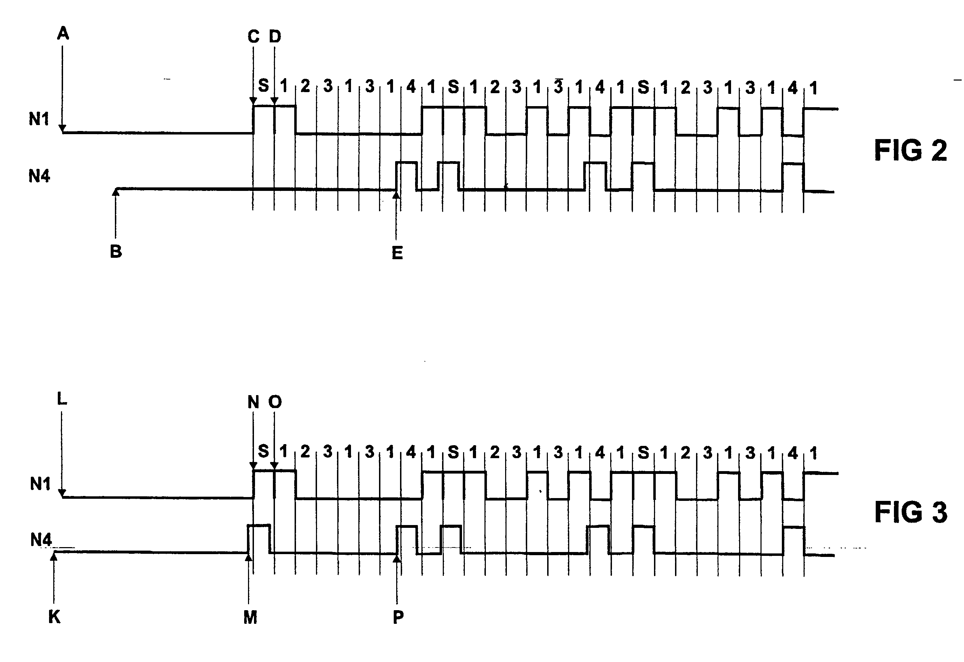

Die vorstehend beschriebene Synchronisation zweier Knoten, genauer gesagt der Knoten N1 und N4 ist in Figur 2 veranschaulicht.

Im betrachteten Beispiel gelangt von den zwei Knoten N1 und N4 als erster der Knoten N1 in den einsatzbereiten Zustand. Der Zeitpunkt, zu dem dies der Fall ist, ist in der Figur 2 mit dem Bezugszeichen A bezeichnet.

Der erste Knoten N1 beobachtet daraufhin zunächst eine vorbestimmte Zeit (eine der Dauer eines Zeitschlitz-Zyklus plus der maximalen Signallaufzeit innerhalb des Systems entsprechende Zeit), ob bereits einer der anderen Knoten Daten und/oder Signale über die Übertragungsstrecke T überträgt.

Da dies im betrachteten Beispiel nicht der Fall ist,
- gibt er zu einem in der Figur 2 mit C bezeichneten Zeitpunkt ein Synchronisationssignal aus und legt intern fest, daß der Zeitpunkt C der Beginn des globalen Zeitschlitzes S ist, und
- gibt im nächsten ihm zugeordneten privaten Zeitschlitz, also zu einem in der Figur 2 mit D bezeichneten Zeitpunkt Null-Daten aus.

Kurze Zeit nach dem Erreichen der Einsatzbereitschaft des ersten Knotens N1 wird der zweite Knoten N4 einsatzbereit. Der Zeitpunkt, zu dem dies der Fall ist, ist in der Figur 2 mit dem Bezugszeichen B bezeichnet.

Der zweite Knoten N4 beobachtet zunächst eine vorbestimmte Zeit (eine der Dauer eines Zeitschlitz-Zyklus plus der maximalen Signallaufzeit innerhalb des Systems entsprechende Zeit), ob bereits ein anderer Knoten Daten und/oder Signale über die Übertragungsstrecke T überträgt.

Der zweite Knoten N4 stellt hierbei fest, daß innerhalb dieses Zeitraumes der erste Knoten N1 ein Synchronisationssignal und Null-Daten ausgibt. Der zweite Knoten N4 synchronisiert sich unter Berücksichtigung dieses Synchronisationssignals und dieser Daten und gibt im nächsten privaten Zeitschlitz, der ihm zugeordnet ist, Daten aus. Der Zeitpunkt, zu dem dies der Fall ist, ist in der Figur 2 mit dem Bezugszeichen E bezeichnet. Die vom zweiten Knoten N4 ausgegebenen Daten können Null-Daten sein oder bereits Nutzdaten enthalten.

Der erste Knoten N1 erkennt hieran, daß eine Synchronisation mit dem zweiten Knoten N4 erfolgt ist, und schaltet daraufhin von der Synchronisations-Betriebsart in die Normal-Betriebsart um, in welcher er
- in jedem ihm zugeordneten Zeitschlitz Daten ausgibt, und
- nicht mehr nur Null-Daten, sondern auch Nutzdaten enthaltende Daten übertragen kann.

Auch der zweite Knoten N4 gibt vom Zeitpunkt E an in allen ihm zugeordneten Zeitschlitzen Daten aus, wobei auch diese Daten unabhängig voneinander Null-Daten oder Nutzdaten enthaltende Daten sein können.

Wie aus der Figur 2 ersichtlich ist, ist der zweite Knoten N4 zum Zeitpunkt E noch nicht exakt mit dem ersten Knoten N1 synchronisiert; die vom zweiten Knoten N4 ausgegebenen Daten werden geringfügig zu früh ausgegeben. Dies wird jedoch in den nachfolgenden Zeitschlitz-Zyklen korrigiert; sämtliche Knoten, die bereits synchronisiert sind, führen in mehr oder weniger großen Abständen (beispielsweise ein Mal pro Zeitschlitz-Zyklus) unter Berücksichtigung der von den anderen Knoten ausgegebenen Synchronisationssignalen und/oder Daten eine Nachsynchronisation durch. Wie aus der Figur 2 ersichtlich ist, ist der zweite Knoten N4 dadurch innerhalb kürzester Zeit (innerhalb von 1 bis 2 Zeitschlitz-Zyklen) exakt mit dem ersten Knoten N1 synchronisiert.

In Figur 3 ist der Fall dargestellt, daß der erste Knoten N1 und der zweite Knoten N4 nahezu gleichzeitig einsatzbereit werden und versuchen, sich mit anderen Knoten zu synchronisieren.

Bei diesem Beispiel gelangt von den zwei Knoten N1 und N4 der Knoten N4 als erster in den einsatzbereiten Zustand. Der Zeitpunkt, zu dem dies der Fall ist, ist in der Figur 3 mit dem Bezugszeichen K bezeichnet.

Der Knoten N4 beobachtet zunächst eine vorbestimmte Zeit (eine der Dauer eines Zeitschlitz-Zyklus plus der maximalen Signallaufzeit innerhalb des Systems entsprechende Zeit), ob bereits ein anderer Knoten Daten und/oder Signale über die Übertragungsstrecke T überträgt.

Da dies im betrachteten Beispiel nicht der Fall ist, gibt er zu einem in der Figur 3 mit M bezeichneten Zeitpunkt ein Synchronisationssignal aus und legt intern fest, daß der Zeitpunkt M der Beginn des globalen Zeitschlitzes S ist.

Sehr kurze Zeit nachdem der Knoten N4 einsatzbereit wurde, gelangt auch der andere Knoten N1 in den einsatzbereiten Zustand. Der Zeitpunkt, zu dem dies der Fall ist, ist in der Figur 3 mit dem Bezugszeichen L bezeichnet.

Der Knoten N1 beobachtet zunächst eine vorbestimmte Zeit (eine der Dauer eines Zeitschlitz-Zyklus plus der maximalen Signallaufzeit innerhalb des Systems entsprechende Zeit), ob bereits ein anderer Knoten Daten und/oder Signale über die Übertragungsstrecke T überträgt.

Der Knoten N1 stellt hierbei fest, daß dies nicht der Fall ist. Daß innerhalb dieses Zeitraumes schon der Knoten N4 begonnen hat, ein Synchronisationssignal auszugeben, registriert er nicht, weil die Übertragung dieses synchronisationssignals erst unmittelbar vor dem Ende des Beobachtungszeitraumes beginnt.

Der Knoten N1 gibt daher zu einem in der Figur 3 mit dem Bezugszeichen N bezeichneten Zeitpunkt ein Synchronisationssignal aus.

Da die Synchronisationssignale der Knoten N1 und N4 fast gleichzeitig ausgegeben werden, bemerken die Knoten N1 und N4 nicht, daß nicht nur der jeweilige Knoten selbst, sondern auch der jeweils andere Knoten ein Synchronisationssignal ausgegeben haben. Beide Knoten warten daher auf den Beginn eines ihnen zugeordneten privaten Zeitschlitzes, um Null-Daten auszugeben.

Der erste private Zeitschlitz, der einem der beiden Knoten N1 und N4 zugeordnet ist, ist ein dem Knoten N1 zugeordneter Zeitschlitz. Der Zeitpunkt, zu dem dies der Fall ist, ist in der Figur mit dem Bezugszeichen O bezeichnet. In diesem Zeitschlitz gibt der Knoten N1 Null-Daten aus.

Der andere Knoten N4 registriert dies und erkennt daran, daß der Knoten N1 mit ihm zeitgleich ein Synchronisationssignal ausgegeben haben muß. Der Knoten N4 synchronisiert sich auf den Knoten N1 und gibt fortan in allen ihm zugeordneten privaten Zeitschlitzen Daten aus, wobei diese Daten Null-Daten oder Nutzdaten enthaltende Daten sein können. Der erste der private Zeitschlitz, in welchem der Knoten N4 Daten ausgibt, beginnt zu einem in der Figur 3 mit dem Bezugszeichen P bezeichneten Zeitpunkt.

An der Tatsache, daß der Knoten N4 Daten ausgibt, erkennt der andere Knoten N1, daß eine Synchronisation mit dem Knoten N4 erfolgt ist. Der Knoten N1 wechselt daher von der Synchronisations-Betriebsart in die Normal-Betriebsart, und gibt fortan in jedem ihm zugeordneten privaten Zeitschlitz Daten aus, wobei diese Daten Null-Daten oder Nutzdaten enthaltende Daten sein können.

Ähnlich wie bei dem in der Figur 2 gezeigten und unter Bezugnahme darauf beschriebenen Beispiel ist der Knoten N4 zunächst noch nicht exakt mit dem ersten Knoten N1 synchronisiert; die vom zweiten Knoten N4 zum Zeitpunkt P ausgegebenen Daten werden geringfügig zu früh ausgegeben. Dies wird jedoch wie bei dem in Figur 2 veranschaulichten Beispiel in den nachfolgenden Zeitschlitz-Zyklen korrigiert.

In den betrachteten Beispielen werden durch die Knoten auch nach deren Synchronisation weiterhin Synchronisationssignale ausgegeben. Die Ausgabe erfolgt jeweils im globalen Zeitschlitz S. Wie vorstehend bereits erwähnt wurde, kann hierauf auch verzichtet werden. Dann können die globalen Zeitschlitze auch anderweitig verwendet werden, beispielsweise
- zur Bestätigung oder Wiederholung oder Freigabe der Ausführung von bestimmten Kommandos, die einem Knoten in einem privaten Zeitschlitz von einem anderen Knoten übermittelt werden (beispielsweise des Auftrages, einen Airbag zu aktivieren),
- zur Veranlassung von Knoten zu einem Betriebsart-Wechsel, und/oder
- zur Übertragung von Netzwerk-Zuständen, wie etwa von Alarm-Zuständen im sogenannten Byteflight-Protokoll.

Wenn nach erfolgter Synchronisation von zwei oder mehr Knoten keine Synchronisationssignale mehr übertragen werden, werden Synchronisationssignale, die (aufgrund eines Fehlers in einem Knoten und/oder auf der Übertragungsstrecke) dennoch übertragen werden, von den bereits synchronisierten Knoten ignoriert. Ferner erweist es sich als vorteilhaft, daß ein Knoten, der, um eine Synchronisation durchzuführen, wiederholt Synchronisationssignale ausgibt, die Ausgabe der Synchronisationssignale nach einer vorbestimmten Zeit oder nach einen bestimmten Anzahl Synchronisationssignal-Ausgaben einstellt. Dadurch kann erreicht werden, daß ein solcher Knoten den Datenaustausch zwischen den anderen Knoten nicht oder nur kurzzeitig stört.

Falls nach erfolgter Synchronisation von zwei oder mehr Knoten keine Synchronisationssignale mehr übertragen werden, erweist es sich als vorteilhaft, wenn die in den globalen Zeitschlitzen S übertragenen anderen Signale oder Daten einen anderen zeitlichen Verlauf und/oder eine andere Dauer aufweisen als die Synchronisationssignale.

Die Synchronisationssignale sind so beschaffen, daß durch sie ein Bezugszeitpunkt definiert wird. Im betrachteten Beispiel wird durch die Synchronisationssignale der Beginn des globalen Zeitschlitzes S definiert; selbstverständliche können die Synchronisationssignale aber auch beliebige andere Zeitpunkte innerhalb eines Zeitschlitz-Zyklusses definieren.

Die Synchronisationssignale weisen einen solchen zeitlichen Verlauf und/oder eine solche Dauer auf, daß sie auch dann, wenn sich die Synchronisationssignale mehrerer Knoten überlagern oder überlappen, von den Empfängern zweifelsfrei als solche zu erkennen sind. Dies wird im betrachteten Beispiel dadurch erreicht, daß sie unter Verwendung eines NRZ-Codes codiert sind, also für eine vorbestimmte Dauer einen vorbestimmten Pegel annehmen. Alternativ kann vorgesehen werden, sie unter Verwendung des MFM-Codes, des XERXES-Codes, des Manchester-Codes oder dergleichen zu codieren.

Die Dauer der Synchronisationssignale ist so festgelegt, daß sie deutlich größer ist als die maximale Signallaufzeit, die im System auftreten kann. Dadurch kann verhindert werden, daß nach dem Ende der Ausgabe eines Synchronisationssignals durch einen ersten Knoten ein zweiter Knoten damit beginnt, ein Synchronisationssignal auszugeben; solche aufeinanderfolgend ausgegebenen und einander nicht überlagernde oder überlappende Synchronisationssignale könnten die Synchronisation stören. Daß von verschiedenen Knoten genau oder fast gleichzeitig Synchronisationssignale ausgegeben werden, muß nicht verhindert werden; solche Synchronisationssignale überlagern oder überlappen sich und stören, wie vorstehend unter Bezugnahme auf die Figur 3 beschrieben wurde, die Synchronisation nicht.

Andererseits soll die Dauer der Synchronisationssignale aber auch nicht zu groß sein. Dadurch kann erreicht werden, daß Synchronisationssignale, die von einem nicht ordnungsgemäß arbeitenden Knoten fälschlicherweise ausgegeben werden, den Betrieb der anderen Knoten nicht mehr als unbedingt notwendig stören.

Wenn die Übertragungsstrecke ein ca. 40 m langer elektrischer Leiter ist, beträgt die Länge der Synchronisationssignale vorzugsweise ca. 2 bis 3 ms.

Es dürfte einleuchten, daß der Aufbau des Systems und der Knoten sowie die Synchronisation und der Betrieb der Knoten mannigfaltig modifizierbar sind.

Beispielsweise besteht keine Notwendigkeit, daß der globale Zeitschlitz der erste Zeitschlitz eine Zeitschlitz-Zyklusses ist.

Darüber hinaus ist der Einsatz des beschriebenen Verfahrens auch nicht auf nach dem TDMA-Verfahren arbeitende Netzwerke beschränkt. Das Verfahren kann beispielsweise auch bei der Verwendung von Bitmap-Protokollen zum Einsatz kommen; die privaten Zeitschlitze, denen der während der Synchronisationsphase für die Übertragung von Synchronisationssignalen reservierte globale Zeitschlitz hinzugefügt wird, wären in diesem Fall die sogenannten contention slots.

Durch das beschriebene Netzwerk ist es unabhängig von den Einzelheiten der praktischen Realisierung möglich, miteinander zu synchronisierende Knoten schnell und einfach zu synchronisieren.

## Patentansprüche

1. Synchrones Netzwerk mit einer Vielzahl von Knoten (N1-N4), die in einer vorgegebenen Reihenfolge für eine vorgegebene Dauer Daten zueinander übertragen können, wobei mehrere oder alle Knoten ein einen Bezugszeitpunkt für die Synchronisation der Knoten definierendes Synchronisationssignal ausgeben können,
**dadurch gekennzeichnet,**
**daß** ein Knoten (N1-N4), der sich mit einem oder mehreren anderen Knoten synchronisieren will, nach der Ausgabe oder dem Empfang des Synchronisationssignals, in einem ihm zugeordneten Zeitschlitz ihn identfizierende Daten ausgibt.

2. Netzwerk nach Anspruch 1,
**dadurch gekennzeichnet,**
**daß** das Synchronisationssignal einen solchen zeitlichen Verlauf und/oder eine solche Dauer aufweist, daß es auch dann, wenn sich von verschiedenen Knoten (N1-N4) ausgegebene Synchronisationssignale überlagern oder überlappen, als Synchronisationssignal identifizierbar ist.

3. Netzwerk nach einem der vorhergehenden Ansprüche,
**dadurch gekennzeichnet,**
**daß** das Synchronisationssignal unter Verwendung eines NRZ-Codes, eines XERXES-Codes, eines Manchester-Codes oder dergleichen codiert ist.

4. Netzwerk nach einem der vorhergehenden Ansprüche,
**dadurch gekennzeichnet,**
**daß** das Synchronisationssignal eine Dauer aufweist, die größer ist, als die maximale Signallaufzeit, die innerhalb des Netzwerks auftreten kann.

5. Netzwerk nach einem der vorhergehenden Ansprüche,
**dadurch gekennzeichnet,**
**daß** ein Knoten (N1-N4), der sich mit einem oder mehreren anderen Knoten synchronisieren will, zunächst eine vorbestimmte Zeit beobachtet, ob ein anderer Knoten ein Synchronisationssignal oder sonstige Daten ausgibt, und daß der betreffende Knoten dann, wenn dies nicht der Fall ist, ein Synchronisationssignal ausgibt.

6. Netzwerk nach Anspruch 5,
**dadurch gekennzeichnet,**
**daß** ein Knoten (N1-N4), der sich mit einem oder mehreren anderen Knoten synchronisieren will, während der Synchronisationsphase nur dann ein Synchronisationssignal ausgibt, wenn er festgestellt hat, daß kein anderer Knoten ein Synchronisationssignal oder sonstige Daten ausgibt,

7. Netzwerk nach einem der vorhergehenden Ansprüche,
**dadurch gekennzeichnet,**
**daß** ein Knoten (N1-N4), der sich mit einem oder mehreren anderen Knoten synchronisieren will, die zeitliche Lage der ihm zugeordneten Zeitschlitze abhängig von dem von ihm ausgegebenen oder empfangenen Synchronisationssignal und/oder abhängig von empfangenen Daten festlegt, die andere Knoten in ihnen zugeordneten Zeitschlitzen ausgegeben haben, um sich gegenüber anderen Knoten zu identifizieren, festlegt.

8. Netzwerk nach einem der vorhergehenden Ansprüche,
**dadurch gekennzeichnet,**
**daß** das Synchronisationssignal in einem bestimmten Zeitschlitz des verwendeten Zeitschlitz-Zyklusses ausgegeben bzw. einem bestimmten Zeitschlitz des verwendeten Zeitschlitz-Zyklusses zugeordnet wird.

9. Netzwerk nach Anspruch 8,
**dadurch gekennzeichnet,**
**daß** der bestimmte Zeitschlitz ein globaler Zeitschlitz (S) ist, in welchem alle Knoten (N1-N4) bestimmte Signale und/oder Daten ausgeben dürfen.

## Claims

1. Synchronous network having a multiplicity of nodes (N1-N4) which can transmit data to one another in a predefined sequence for a predefined duration, it being possible for a plurality of nodes, or all the nodes, to output a synchronization signal which defines a reference time for the synchronization of the nodes, **characterized in that** a node (N1-N4) which wishes to synchronize with one or more other nodes outputs data which identifies it in a time slot assigned to it after the outputting or the reception of the synchronization signal.

2. Network according to Claim 1, **characterized in that** the synchronization signal has such a time profile and/or such a duration that it can be identified as a synchronization signal even if synchronization signals which are output by different nodes (N1-N4) are superposed on one another or overlap.

3. Network according to one of the preceding claims, **characterized in that** the synchronization signal is encoded using an NRZ code, a XERXES code, a Manchester code or the like.

4. Network according to one of the preceding claims, **characterized in that** the synchronization signal has a duration which is longer than the maximum signal transit time which can occur inside the network.

5. Network according to one of the preceding claims, **characterized in that** a node (N1-N4) which wishes to synchronize with one or more other nodes initially observes for a predetermined time to determine whether another node is outputting a synchronization signal or other data, and **characterized in that** the respective node outputs a synchronization signal if this is not the case.

6. Network according to Claim 5, **characterized in that** a node (N1-N4) which wishes to synchronize with one or more other nodes outputs a synchronization signal during the synchronization phase only if it has detected that no other node is outputting a synchronization signal or other data.

7. Network according to one of the preceding claims, **characterized in that** a node (N1-N4) which wishes to synchronize with one or more other nodes defines the chronological position of the time slots assigned to it as a function of the synchronization signal which is output by it or received by it and/or as a function of received data which other nodes have output in their assigned time slots, in order to identify itself to other nodes.

8. Network according to one of the preceding claims, **characterized in that** the synchronization signal is output in a specific time slot of the time slot cycle which is used and is assigned to a specific time slot of the time slot cycle which is used.

9. Network according to Claim 8, **characterized in that** the specific time slot is a global time slot (S) in which all the nodes (N1-N4) are allowed to output specific signals and/or data.

## Revendications

1. Réseau synchrone comprenant une pluralité de noeuds (N1-N4), lesquels peuvent transmettre des données entre eux dans un ordre prédéfini pendant une durée prédéfinie, plusieurs ou la totalité des noeuds pouvant délivrer un signal de synchronisation définissant un instant de référence pour la synchronisation des noeuds,
**caractérisé en ce**
**qu'**un noeud (N1-N4) qui veut se synchroniser avec un ou plusieurs autres noeuds délivre des données qui l'identifient dans un créneau temporel qui lui est affecté après la délivrance ou la réception du signal de synchronisation.

2. Réseau selon la revendication 1, **caractérisé en ce que** le signal de synchronisation présente un tel tracé dans le temps et/ou une telle durée que même lorsque les signaux de synchronisation délivrés par différents noeuds (N1-N4) se superposent ou se chevauchent, il peut être identifié en tant que signal de synchronisation.

3. Réseau selon l'une des revendications précédentes, **caractérisé en ce que** le signal de synchronisation est codé en utilisant un code NRZ, un code XERXES, un code Manchester ou équivalent.

4. Réseau selon l'une des revendications précédentes, **caractérisé en ce que** le signal de synchronisation présente une durée qui est supérieure au temps de propagation maximum du signal qui peut se produire à l'intérieur du réseau.

5. Réseau selon l'une des revendications précédentes, **caractérisé en ce qu'**un noeud (N1-N4) qui veut se synchroniser avec un ou plusieurs autres noeuds observe tout d'abord pendant un temps prédéfini si un autre noeud délivre un signal de synchronisation ou d'autres données et **en ce que**, si ce n'est pas le cas, le noeud concerné délivre un signal de synchronisation.

6. Réseau selon la revendication 5, **caractérisé en ce qu'**un noeud (N1-N4) qui veut se synchroniser avec un ou plusieurs autres noeuds ne délivre un signal de synchronisation pendant la phase de synchronisation que lorsqu'il a déterminé qu'aucun autre noeud ne délivre un signal de synchronisation ou d'autres données.

7. Réseau selon l'une des revendications précédentes, **caractérisé en ce qu'**un noeud (N1-N4) qui veut se synchroniser avec un ou plusieurs autres noeuds détermine la position dans le temps des créneaux temporels qui lui sont affectés en fonction du signal de synchronisation délivré ou reçu par lui et/ou en fonction de données reçues, que d'autres noeuds ont délivrées dans les créneaux temporels qui lui sont affectés, afin de s'identifier par rapport aux autres noeuds.

8. Réseau selon l'une des revendications précédentes, **caractérisé en ce que** le signal de synchronisation est délivré dans un créneau temporel défini du cycle de créneaux temporels utilisé ou affecté à un créneau temporel défini du cycle de créneaux temporels utilisé.

9. Réseau selon la revendication 8, **caractérisé en ce que** le créneau temporel défini est un créneau temporel global (S) dans lequel tous les noeuds (N1-N4) sont autorisés à délivrer certains signaux et/ou certaines données.
